# EUROPEAN PATENT APPLICATION

(11) **EP 1 376 110 A1**
(43) Date of publication of application: **02.01.2004**
(21) Application number: 02014455.6
(22) Date of filing: 28.06.2002
(51) Int. Cl.: G01N 25/72

(54) **Test method for measuring the heat transfer**

(71) Applicant: Linde Aktiengesellschaft, 65189 Wiesbaden (DE)
(72) Inventor: Lior, Noam, Lansdowne, PA 19050 (US); Wiberg, Roland, 87032 Ullanger (SE); Aström, Anders, 11244 Stockholm (SE); Holm, Torsten, 18130 Lidingö (SE)
(74) Representative: Kasseckert, Rainer

(57) **Abstract**

The invention relates to a test method for measuring the distribution of heat transfer and the uniformity of the change of temperature of one or more objects (2) cooled or quenched by a gas or a fluid stream in a chamber (4) by
- applying a thin heating element (heater foil (6) or a conducting colour on the surface of the object (2)
- placing the object into the chamber (4)
- directing a camera (8) or a fibre optic to the object (2)
- connecting the heating element with a source of electric energy
- starting the cooling gas or fluid stream
- taking pictures or a film, registering the temperature fields and the changes and
- calculating the distribution of the heat transfer coefficients.

## Description

The invention relates to a test method for measuring the distribution of the heat transfer or the uniformity of the change of temperature of one or more test objects heated or cooled by a gas stream in a furnace or in a chamber.

Surface temperature distribution of objects being cooled or heated in a fluid has up to now been determined by thermocouple or resistance thermometer measurement, by infrared temperature measurements or by the use of crayons which shift colour. The thermocouples have to be mounted at several places at the surface or below the surface. In the latter case, holes must be drilled into the object and the thermocouples are then to be mounted inside these holes. Many thermocouples are needed if a good indication of the surface temperature is required. Infrared temperature measurement can give detailed temperature distributions only when very expensive instruments are used, and they are very susceptible to effects of the radiation from other surfaces in the system. The use of crayons gives only qualitative information on surface temperature distributions. Neither technique is able to accurately determine transient behaviours.

In the article: Roland Wiberg, Barbro Muhammad-Klingmann, Jerome Ferrari, and Noam Lior, "Use of thermochromic coatings for the experimental determination of the distribution of heat transfer coefficients in gas-cooled quenching", Proc. 5^{th} ASM Heat Transfer and Surface Engineering Conference in Europe, Eds. E.J. Mittemeijer and J. Grosch, ASM International, pp.. 275-286, Gothenburg, Sweden, 7-9 June 2000, it is proposed to use thermochromic liquid crystal (TLC) coatings to evaluate both temperature and heat transfer coefficients by using different visual image sensing techniques combined with mathematical modelling in application of quenching in gas.

The test object in this article is a cylinder. The outer surfaces were coated with TLCs. The cylinder was heated by heating foils from inside. The test object was placed in a test chamber, a camera was directed to the object and then a cooling gas stream was started. The camera took pictures and registered the temperature distributions and their changes. From that the distribution of the heat transfer coefficients has been calculated. Heating by electrical current or by foils from the inside of the object is possible only for special test objects, not for normal objects to be quenched. Only hollow objects can be heated from inside. So there is a need to propose a new heating for objects with arbitrary or irregular forms, which are not hollow. It is an object of the invention to propose a better heating to allow testing of objects with any arbitrary form.

The object of the invention is attained by using thin heating elements, heater foils or conductive colours on the surface of the test object.

It is another object of the invention to find a new application of the developed techniques beside the quenching.

This object is attained by the use of the test methods of claim 2 for heating in furnaces.

With the invention it is possible to measure relatively simply and inexpensively the instantaneous steady or transient surface temperature and heat transfer coefficient distributions of objects cooled or heated in a transparent fluid, i.e. in a gas.

The invention has the following advantages:

The complete surface temperature distribution is obtained in one single measurement. Compared to other techniques the new technique is less complicated, requires less preparations and is cheaper.

The method is non destructive and can be applied to real, industrial parts and objects, which need not to be hollow. The method can be used both as a laboratory test and method for measuring surface temperature distributions on parts processed in industrial processes.

The method can be used to optimize quenching conditions like gas pressure, velocity, charge design, cooling chamber design and arrangement of coolant flow set up (inlets- and outlets, gas nozzle configurations etc.) for reaching required cooling rate and uniformity.
The temperature of the gas before and after quenching or heating can be measured and give additional information.

The method exhibits a colour field as a function of the surface temperature, with high sensitivity, of about 0,1 °C. Quick visual observation of the object can, with some training, indicate the extent of temperature uniformity of the object. Software that automatically plots and prints the measured temperature fields has been developed.

The technique can be used also in measuring cooling or heating uniformity on quench chambers and furnaces. Employing devices like fibreoptics, it can also be used in vessels which have no windows for visual access. With the invention there can be established the best quenching configurations for specific parts with respect to required hardness and distortions of the parts. Similarly, manufacturers of heating or cooling chambers of any type can be supported to built better chambers with relatively uniform heat and temperature distributions.

### Some applications:

Applying the invention to parts to be quenched and then subjecting them to steady or transient gas streams at different velocities and directions, till the combinations of conditions which gives the desired temperature uniformity is obtained. The quencher can then quench parts at these conditions. The experiment can be conducted in a very simple transparent plastic "wind tunnel" or in the quencher's quench chamber using a window, a fibre optic cable, or a internal video camera (the temperatures can remain low).

Real or build probes which are coated with the heating element of the invention can be used to determine whether the quenching rate is fast enough.

The surveillance of the heat distribution can be made by cameras in the visible spectral range. In this case the test objects or the heating foils are covered with thermochromic liquid crystals. These elements sustain temperatures up to 120 °C. For measurements in higher temperature ranges there can be used a camera which is working in the infrared range. In this range it is not necessary to coat the objects with a special colour. The objects are sending out IR-radiation by themselves.

If in a real chamber there is no visual access, it is possible to place a video camera in the chambers or to look with fibre optics and an illumination into the chamber.

It has some advantages to use an strip foil heater. The strip foil is a very thin flat metal wire (12 micrometer) circuit encased in a thin insulator, the whole foil being very flexible. Powered by electricity, it produces a uniform heat flux. Measurement of its surface temperature distribution by TLC or other techniques such as IR, and measurement of the surrounding cooling temperature, allow the determination of the distribution of the surface heat transfer coefficients.

The advantages compared to conventional foils are:
1. More uniform heat flux distribution over the surface, because the current is forced the same over the whole surface (one may assume no electromagnetic Hall effect as in the whole foils).
2. The surface of the body do not need to be flat. It is possible to apply the foils to round cylinders and they can be applied also to other surface shapes, while a conventional foil needs a rectangular surface to work.
3. Higher voltage supply can be used, which reduces the current and therefore, the dimensions of the cables, power supply, etc.
4. The foil can be used also on large models.
5. The surface temperature differences over the surface to be measured are with this method large and, therefore, easy measurable. The prototype foil works up to 400 °C, which may make it suitable for temperature measurements using IR and TLC techniques.
6. The fast time response of the thin foil (less than 1 minute for a test) allows high productivity.

More details of the invention will be clear by description of a best mode of the invention with one figure.

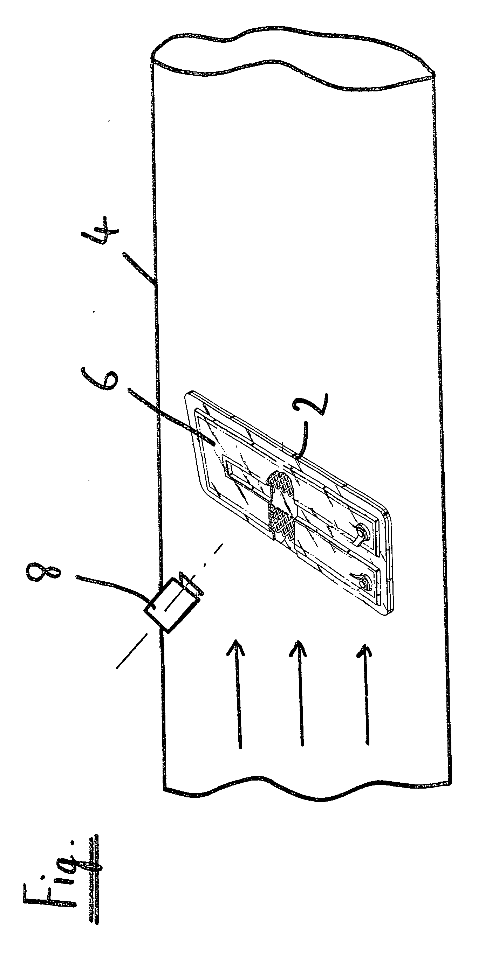

The figure shows an test object 2 which is to be cooled in a chamber 4. The gas stream is indicated by the three arrows. The test object 2 is heated by a heater foil 6, adhering on the object 2. In the chamber 4 a video camera 8 is mounted for observing the surface of the test object. After connecting the heating foil 6 to a source of electric energy and heating the heating foil and the test object 2, a cooling gas stream is started. The video camera 8 is taking pictures or a film, registering the temperature fields and their changes. From this material a known mathematical method can calculate the distribution of the heat transfer coefficients.

## Claims

1. Test method for measuring the distribution of heat transfer and the uniformity of the change of temperature of one or more objects (2) cooled or quenched by a gas or a fluid stream in a chamber (4) by
- applying a thin heating element (heater foil (6) or a conducting colour) on the surface of the object (2)
- placing the object into the chamber (4)
- directing a camera (8) or a fibre optic to the object (2)
- connecting the heating element with a source of electric energy
- starting the cooling gas or fluid stream
- taking pictures or a film, registering the temperature fields and the changes and
- calculating the distribution of the heat transfer coefficients.

2. Test method for measuring the distribution of heat transfer and the uniformity of the change of temperature of one or more objects (2) heated by a gas stream in a furnace by
- placing the object into a chamber
- directing a camera or a fibre optic to the object
- starting the heating gas stream
- taking pictures or a film, registering the temperature fields and their changes
- calculating the distribution of the heat transfer coefficients.

3. Method according to claim 1 or claim 2, whereby the heating element and/or the surface of the object is covered by thermochromic liquid crystals (TLC) and the camera is working in the visible spectral range.

4. Method according to claim 1 or claim 2, whereby the camera is working in the IR-range.

5. Method according to one of the preceding claims, whereby the heating element is a strip foil heater.
